# EUROPEAN PATENT APPLICATION

(11) **EP 0 586 280 A1**
(43) Date of publication of application: **09.03.1994**
(21) Application number: 93402078.5
(22) Date of filing: 20.08.1993
(51) Int. Cl.: F04B 7/06, G01N 35/08

(54) **Apparatus for flow injection analysis and processes for using same**

(30) Priority: 24.08.1992 US 933833; 22.03.1993 US 34952
(71) Applicant: THE DOW CHEMICAL COMPANY, Midland, Michigan 48640 (US)
(72) Inventor: Wolcott, Duane K., Baton Rouge, Louisiana 70808 (US)
(74) Representative: Peuscet, Jacques

(57) **Abstract**

A flow injection analysis apparatus (10) for the analysis of a process fluid and processes for using the same, wherein the apparatus comprises a plurality of reciprocating, valveless, piston metering pump heads (26), a single drive source, a drive shaft for mechanically driving the plurality of pump heads via the single, common drive source and through the use of intermeshing gears provided on the plurality of pump heads, the drive shaft and drive source, a mixing device (16) for receiving aliquots of fluid from the plurality of pump heads (26), and an analytical device (23) in fluid communication with the mixing device (16).

## Description

The present invention relates to apparatus for flow injection analysis and to processes of flow injection analysis and process control which utilize such apparatus.

Flow injection analysis (FIA) apparatus and processes are well-known in the analytical chemistry art, as are processes for process control employing flow injection analysis. Currently very low-volume FIA can be accomplished only by means of the syringe-type pumps more commonly used in liquid chromatography, or by means of reciprocating, valveless, piston metering pumps and pump arrangements of the type described, for example, in United States Patents No. 5,015,157 (Pinkerton et al.), 5,044,889 (Pinkerton) and 5,092,037 (also to Pinkerton), and commercially available from Fluid Metering, Inc., Oyster Bay, New York under various "RH" and "STH" model designations.

Syringe-type pumps pose a significant problem for micro-FIA (FIA using as little as 100 microliters of reagent per data point) in terms of the reproducibility of aliquots delivered thereby (especially when using multiple reagent flows and pumps). The valveless metering pumps are sufficiently consistent on an aliquot-to-aliquot basis, but are prone to phasing problems in the delivery of more than one or two reagents.

To solve this phased delivery problem while still retaining the small volumes and aliquot-to-aliquot consistency which characterizes the valveless metering pumps, one pump arrangement has been made known (Fluid Metering, Inc., model no. NP-1) pairing two conventional stepper motor/valveless metering pump combinations via a computer. The computer is programmed to control the sequence and delivery of reagent aliquots through control of the two stepper motors. The stepper motors must be very closely synchronized in terms of motor speeds and aliquot delivery cycle times, and this arrangement obviously entails a substantial degree of added complexity and expense with multiple reagent flows and pumps.

Another arrangement or apparatus which is presently known uses dual pump head modules mounted on a single drive source and placed precisely 180 degrees out of phase, so that at the point one pump begins its delivery stroke for delivering an aliquot or reagent to the injection valve, mixing coil and detector portions of an FIA system, the second pump ends its delivery stroke and begins its fill stroke in preparation for delivering the next aliquot. This arrangement is, however, strictly limited to two material or two reagent systems and to a 180 degree out-of-phase phase relationship between the two pumps.

It would be desirable if an apparatus were available for reagent delivery in micro-FIA which possessed aliquot-to-aliquot consistency of delivery and which could deliver aliquots of multiple reagents without phasing problems and without the complexity or expense of a computer-based, multiple stepper motor arrangement or the pump phase angle and reagent limitations of the above-described dual pump head/single drive source arrangement, and which also allows maximum flexibility of phase angle control and flow regimes.

The present invention in one aspect provides an apparatus meeting these needs. The apparatus of the present invention comprises i) a plurality of reciprocating, valveless, piston metering pump heads of the sort commercially available from Fluid Metering, Inc. under the "RH" and "STH" model designations and as generally described in United States Patents No. 5,015,157 (Pinkerton et al.), 5,044,889 (Pinkerton) and 5,092,037 (also to Pinkerton), ii) a single drive source, iii) a drive shaft for mechanically driving the plurality of pump heads via the single, common drive source and through the use of intermeshing gears provided on the plurality of pump heads, the drive shaft and drive source, iv) a mixing device for receiving aliquots of fluid from the plurality of pump heads, and v) an analytical device in fluid communication with the mixing device.

In other aspects, the present invention provides a process for conducting repeated flow injection analyses, wherein analyses are conducted more or less frequently depending on feedback from associated analytical devices on previous sample analyses. Where the associated analytical devices indicate a change in a process is underway, then analyses can be undertaken more quickly to permit the change to be monitored.

Several new modes of flow injection analysis are also enabled by the apparatus of the present invention, and in a final aspect the present invention relates to a sample-injection-valveless FIA apparatus of the type described above, wherein the process stream to be analyzed is supplied to a mixing coil or other dispersing/mixing device through one of the piston metering pumps rather than by a sample injection valve.

Figure 1 schematically illustrates a flow injection analysis apparatus of the present invention including a sample injection valve.

Figure 2 depicts a plurality of piston metering pumps, a stepper motor and drive shaft with intermeshing gears as employed in a preferred embodiment of the FIA apparatus of the present invention.

Figures 3-10 depict a known portion of the apparatus of Figure 2, namely a reciprocating, valveless, piston metering pump of the type currently sold under the "STH" series designation by Fluid Metering, Inc., Oyster Bay, New York, in consecutive stages of a sampling/sample or aliquot delivery cycle, with the views in Figures 3, 5, 7 and 9 being taken in cross-section and views 4, 6, 8 and 10 being taken in a cross-section along lines B-B in corresponding Figures 3, 5, 7 and 9.

Figure 11 is an enlarged view of the duct end of a piston in a preferred piston metering pump of the type shown in Figures 3-10.

Figure 12 is a side view of the same duct end shown in Figure 11.

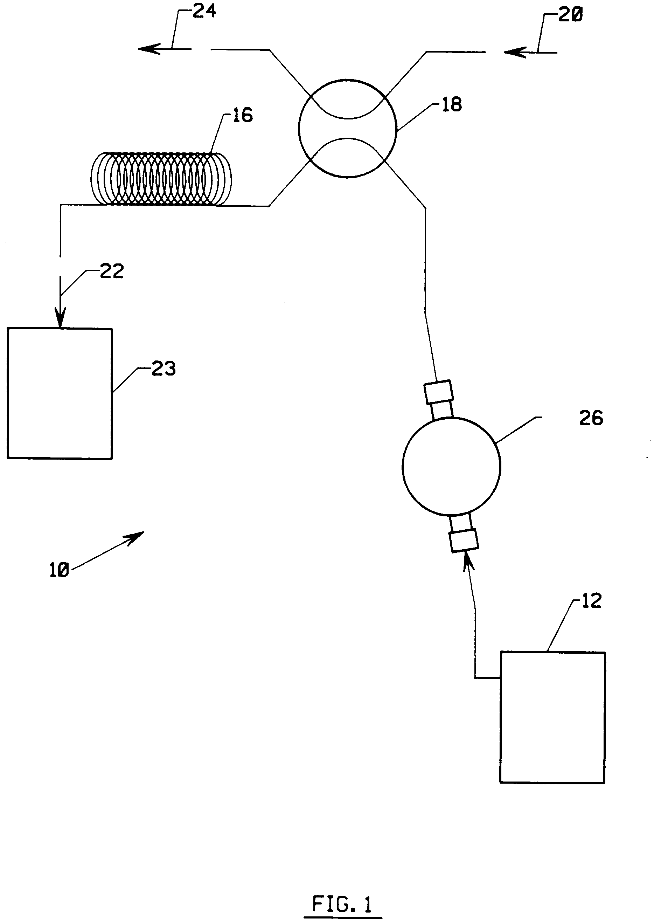

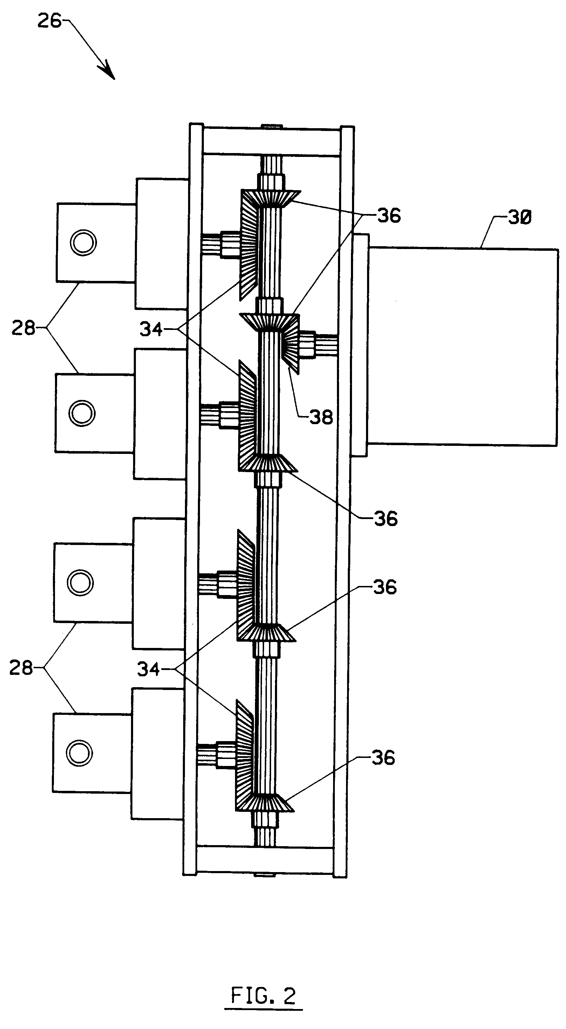

Referring now to Figures 1-12, and more particularly to Figure 1, a preferred flow injection analysis apparatus 10 of the present invention is illustrated. The apparatus 10 comprises one or more reservoirs 12 of one or more reagents and diluents/carriers, a grouping 26 (shown in Figure 2) of piston metering pumps which are driven by a single drive source through a drive shaft and through intermeshing gears carried on the pumps, drive shaft and drive source for delivering aliquots of the various reagents and diluents/carriers to a mixing coil 16, and a sample injection valve 18 for cyclically or intermittently drawing an aliquot from a process fluid stream 20 to be mixed and reacted with the reagents in the mixing coil 16. A stream 22 from the mixing/reaction coil 16 proceeds to an analytical device or detector 23 for analysis, while those portions of the process stream 20 not valved into the coil 16 are conventionally routed to a drain or to disposal (not shown) via stream 24.

Referring now to Figure 2, the apparatus 26 comprises a plurality of reciprocating, valveless, piston metering pump heads 28, a single drive source which is preferably a stepper motor such as sold by the Compumotor Division of Parker Hannifin Corporation under the designation S/SX 57-102, and a drive shaft 32 with associated gearing for mechanically driving the plurality of pump heads 28 via the stepper motor 30. Thus, each of the pump heads 28 carries a gear 34 for interengagement with corresponding gears 36 on the drive shaft 32, with one of the gears 36 being interengaged with a gear 38 on the stepper motor 30. As the stepper motor 30 causes the gear 38 to rotate, gears 34 are rotated via the gears 36 and the drive shaft 32 carrying gears 36 thereon.

By using the apparatus 26 to deliver reagents and diluents to the mixing coil 16, an almost infinite array of possible modes of flow injection analysis are made available.

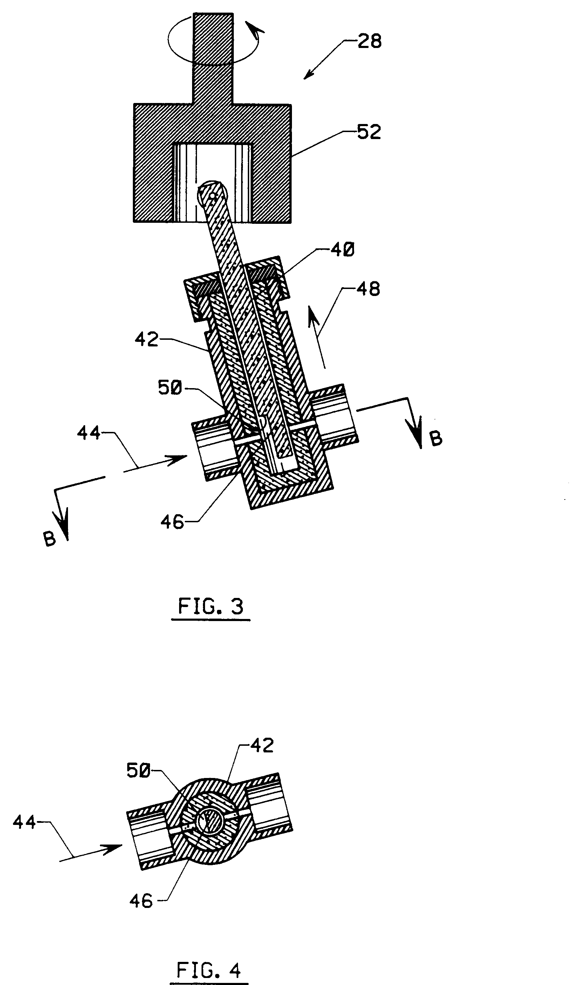

The valveless, piston metering pump heads 28 operate, as shown in Figures 3-10, through the reciprocation of a rotating piston 40 in a T-shaped cylinder 42.

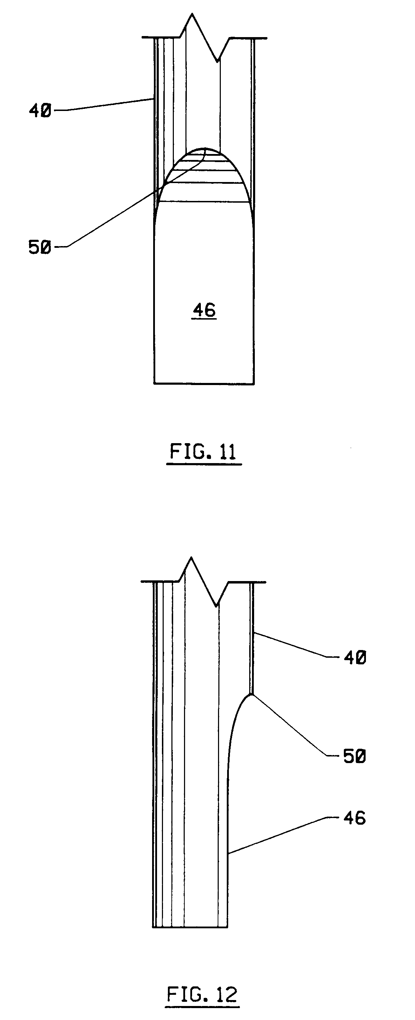

A stream 44 of a reagent or diluent/carrier which is to be supplied to a mixing coil 16 passes through that portion of the T-shaped cylinder 42 which is transverse of the piston 40's axis of reciprocation. As the piston 40 is rotated, a duct 46 on the piston 40 communicates first with a source of a reagent, and pulls by its partial retraction from cylinder 42 in the direction of arrow 48 an aliquot or sample of the reagent into that portion of the cylinder 42 being vacated by the piston 40 (Figures 3 and 4). It should be noted that while the duct 46 on the present, commercially-available pumps from Fluid Metering, Inc. (as shown in Figures 3-10) is flat and rectangular in shape, for purposes of preventing the formation of bubbles in the aliquot it is considered that the duct 46 should preferably be as shown in Figures 11 and 12. The top end 50 of the duct 46 presents a parabolic edge when viewed as in Figure 11, and can be viewed from the perspective of Figure 12 as curving outwardly from a conventional flat, rectangular portion to being generally perpendicular to the outer circumference of the piston 40.

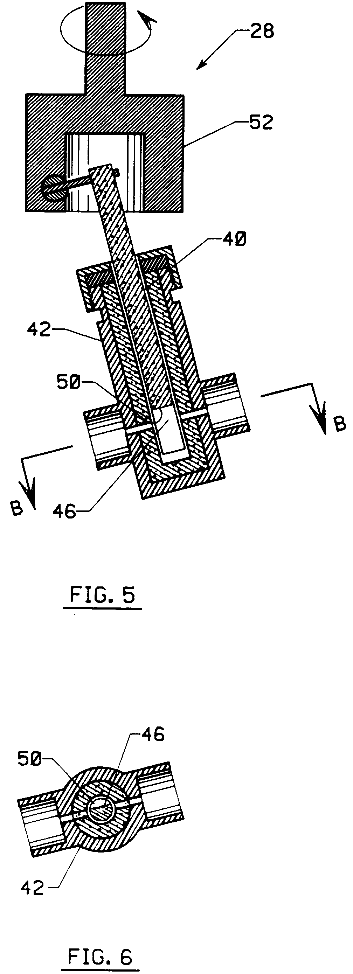

At the position shown in Figures 5 and 6, the piston's retraction from the cylinder 42 is ended, and the aliquot is by the rotation of piston 40 and duct 46 moving toward fluid communication with a downstream side of the tee.

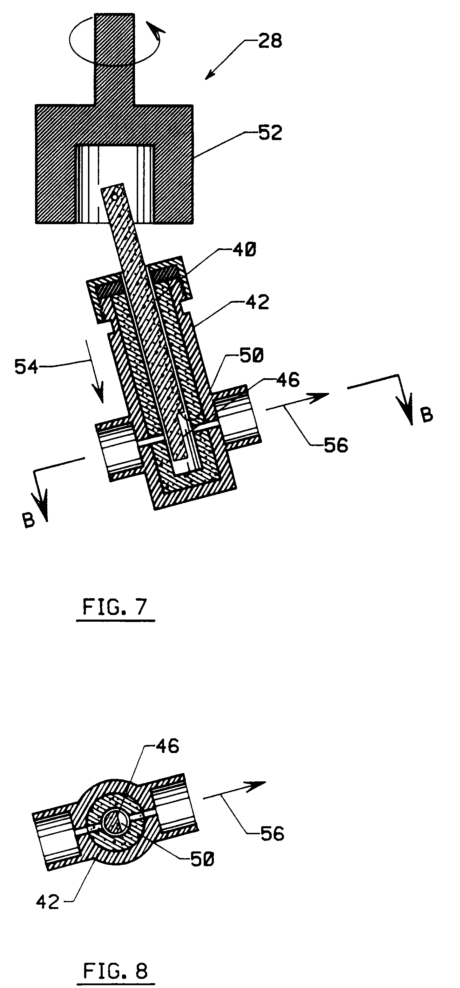

In Figures 7 and 8, on continued rotation of member 52 (via the interaction of gears 34-38) the piston 40 is reciprocated in the direction of arrow 54, and the aliquot of reagent is discharged toward the mixing coil 16 (in the direction of the arrow 56).

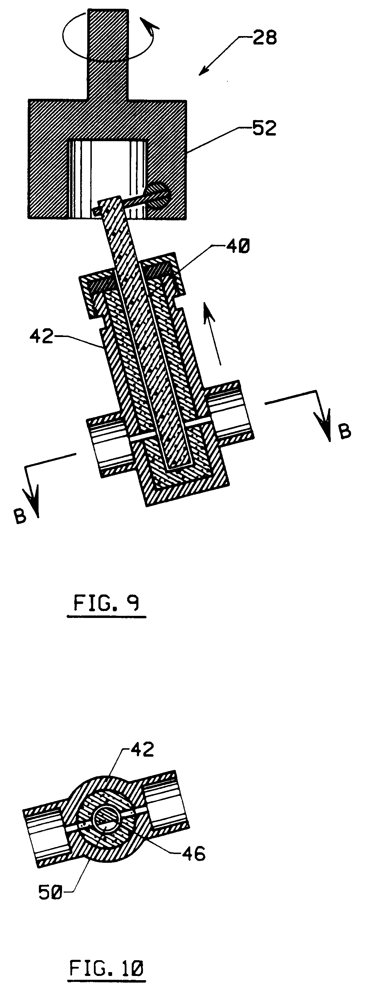

In Figures 9 and 10, the discharge stroke of the piston 40 is ended, and the piston 40 and duct 46 are in the process of being rotated to receive a new aliquot of reagent and to begin the cycle again.

Those skilled in the art will appreciate with respect to the apparatus of Figures 1 and 2, based on a fundamental understanding of the pumps 28 and their manner of operation as briefly described herein, that by:
(a) changing the angular displacement of a member 52 (with reference to where the piston 40 is joined via a ball-and-joint connection to a given member 52), and thus the beginning stroke position of a piston 40 in one of the pumps 28, relative to the members 52 of other pumps 28 and the pistons 40 joined to such members 52;
and/or (b) using different gear combinations for driving the various pumps 28;
and/or (c) changing the angle at which the piston 40 and cylinder 42 are disposed to the member 52 and thus the stroke length of the piston 40 in a given pump 28,

the order in which aliquots of the various reagents are delivered to the mixing coil 16 for an FIA cycle, the rate at which such aliquots are delivered relative to other reagents, and the size of an aliquot of a given reagent relative to aliquots of other reagents delivered by other pumps 28 may all be changed.

As has been previously noted, this arrangement thus enables a number of modes of flow injection analysis to be carried out in a highly reproducible way. For example, a simple reagent dilution involving one or more concentrated reagents and a diluent would have the pumps therefor in phase with one another, so that the beginnings of the delivery and fill strokes for the several pumps are the same. The dilution volume is set by independently adjusting the strokes of the pumps, taking into account any difference in the size of the pump heads for the concentrated reagents (typically smaller) and for the diluent (typically larger). The total volume of dilute reagent(s) to be delivered to the mixing coil is set by setting the rotational speed of the single stepper motor.

It should be noted that the flow of materials to the mixing coil in this and each of the other modes of analysis explored below can be increased, decreased, varied, stopped or even reversed (for improving mixing of the various materials in the mixing coil, for example, by repeatedly alternating between reverse and forward flow) according to any given flow profile, provided the software can be written for the stepper motor to follow such a profile.

A "sinusoidal", pulseless flow mode has been suggested, for example, for a syringe pump in which samples and reagents are loaded as ordered zones during a "suction" or aspiration stage, and dispersion and detection follow during a positive pressure pulse, see Ruzicka, J., Marshall, G. D., Christian, G. D., Analytical Chemistry, Vol. 62, No. 17, pp. 1861-1866 (Sept. 1, 1990). This mode can be accomplished with the apparatus of Figure 2 by using multiple pump heads in phase and set to the largest volume or stroke for each pump, with the speed of rotation of the stepper motor being increased and decreased to emulate one half of a sine curve, then being reversed and again emulating one half of a sine curve through increasing and decreasing stepper motor rotation.

Further, as the geometry or circumstances of reagent delivery are fixed independent of the speed of rotation of the stepper motor and thus of the cycle length, the practical limits on how fast an FIA can be carried out are determined by the speed of analysis in an associated analytical device or detector.

Thus, where the feedback from the analytical device or detector 23 suggests that some process changes are taking place which require closer monitoring or where it is expected that there will be a need at a given, critical point in a process for increased monitoring, the number of flow injection analyses conducted can be increased accordingly. Similarly, where the feedback indicates that little is going on or where it can be expected that little will be going on in a given process, the rate of analysis can be slowed or even stopped to conserve reagents. A process for conducting repeated flow injection analyses is thus enabled whereby, based on feedback from preceding flow injection analyses, the rate of analysis may be increased, decreased or analysis may be stopped altogether. This mode of operation, which may be described in a shorthand manner as "adaptive analysis timing", can be directed most expeditiously via a computer.

A pulseless flow mode for delivering one or more reagents to a mixing coil would have the various pumps therefor arranged so that, for example, two pumps would be 180 degrees out of phase with one another, three pumps would be 120 degrees out of phase with one another (at 120 degrees, 240 degrees, 360 degrees), four pumps would be 90 degrees out of phase with one another, etc.

The apparatus of Figure 2 could also be used for a reaction/solvent extraction technique or mode of analysis, wherein a concentrated reagent and diluent could be delivered in phase to react with a process stream sample in a mixing coil, while an immiscible extraction solvent is added downstream of the mixing coil by a pump which is set 180 degrees out of phase with the reagent and diluent pumps. The various materials are mixed in a solvent extraction coil, phase separated and the appropriate phase directed to an analytical device or detector.

It is also possible in an alternate embodiment of the FIA apparatus of the present invention to eliminate the injection valve 18 shown in Figure 1, by metering the process fluid to be analyzed through a metering pump as if it were a concentrated reagent or diluent and placing, for example, the process fluid pump 180 degrees out of phase with a concentrated reagent pump and a diluent pump.

In a variation of this last mode, the process fluid pump and concentrated reagent pump are placed in phase with each other, and a diluent/carrier pump is placed 180 degrees out of phase with the reagent and process fluid pumps (so that the diluent/carrier material acts essentially as a wash and transport medium for each preceding reaction mixture of process fluid and reagent(s)).

The advantage seen in elimination of the sample injection valve 18 and its replacement in essence with a valveless, piston metering pump is in the increased, reliable lifetime that can be expected in a process environment from such a course of action.

The skilled artisan will readily appreciate, from the few illustrative modes of flow injection analysis described above, that more modes and variations thereon can be employed with the apparatus of the present invention than can be adequately described herein. Similarly, while preferred embodiments of the apparatus of the present invention have been provided, still other embodiments can be constructed which do not depart either in scope or spirit from the invention as more particularly defined in the accompanying claims.

## Claims

1. A flow injection analysis apparatus for the analysis of a process fluid, comprising:
a plurality of reciprocating, valveless, piston metering pump heads;
a single drive source;
a drive shaft;
intermeshing gears provided on the plurality of pump heads, the drive shaft and drive source for enabling the single drive source to drive each of the plurality of pump heads through the drive shaft;
a mixing device for receiving aliquots of fluid from the plurality of pump heads; and
an analytical device in fluid communication with the mixing device.

2. An apparatus as described in Claim 1, wherein the plurality of reciprocating, valveless, piston metering pump heads are of a type including a piston having a flat defined therein for carrying an aliquot of a reagent thereon, and wherein the piston is hingedly connected to a rotational member which rotates generally around the longitudinal axis of the piston, such that the stroke length, rate of rotation and rate of reciprocation of the piston within a cylinder may be determined by the angle at which the piston's longitudinal axis is disposed with respect to the rotational member and the rate of rotation of the rotational member, respectively.

3. An apparatus as defined in Claim 2, wherein the flat on the piston of a pump head defines a top end presenting a parabolic edge and a corresponding surface curving from a flat, rectangular portion to being generally perpendicular to an outer circumference of the piston.

4. An apparatus as defined in Claim 1, wherein the single drive source is a stepper motor.

5. A flow injection analysis apparatus for the analysis of a process fluid, comprising:
a plurality of reciprocating, valveless, piston metering pump heads;
a single drive source;
a drive shaft;
intermeshing gears provided on the plurality of pump heads, the drive shaft and drive source for enabling the single drive source to drive each of the plurality of pump heads through the drive shaft;
a mixing device for receiving aliquots of fluid from the plurality of pump heads; and
an analytical device in fluid communication with the mixing device,
wherein the process fluid to be analyzed is supplied to the mixing device through one of said plurality of piston metering pump heads.

6. An apparatus as described in Claim 5, wherein the plurality of reciprocating, valveless, piston metering pump heads are of a type including a piston having a flat defined therein for carrying an aliquot of a reagent thereon, and wherein the piston is hingedly connected to a rotational member which rotates generally around the longitudinal axis of the piston, such that the stroke length, rate of rotation and rate of reciprocation of the piston within a cylinder may be determined by the angle at which the piston's longitudinal axis is disposed with respect to the rotational member and the rate of rotation of the rotational member, respectively.

7. An apparatus as defined in Claim 6, wherein the flat on the piston of a pump head defines a top end presenting a parabolic edge and a corresponding surface curving from a flat, rectangular portion to being generally perpendicular to an outer circumference of the piston.

8. An apparatus as defined in Claim 5, wherein the single drive source is a stepper motor.

9. A flow injection analysis process using an apparatus as defined in any one of Claims 1-8.

10. A process as defined in Claim 9, wherein the time between flow injection analyses is adjusted responsive to the results of one or more preceding analyzes.
